# EUROPEAN PATENT APPLICATION

(11) **EP 4 733 359 A1**
(43) Date of publication of application: **29.04.2026**
(21) Application number: 25204475.5
(22) Date of filing: 24.09.2025
(51) Int. Cl.: C08L 83/04, C08J 3/12, C08J 7/04, C09J 183/04, H01B 3/46, C08G 77/12, C08G 77/20

(54) **FLEXIBLE SILICONE THERMAL CONDUCTIVE COMPOSITION AND PREPARATION METHOD THEREOF**

(30) Priority: 28.10.2024 CN 202411511191
(71) Applicant: Shenzhen Bornsun New Material Co., Ltd., Shenzhen City, Guangdong (CN)
(72) Inventor: Chen, Guanjin, Shenzhen (CN); Cai, Jian, Shenzhen (CN); Zhao, Yangyang, Shenzhen (CN); Zhong, Xiaojuan, Shenzhen (CN); Yao, Xuena, Shenzhen (CN)
(74) Representative: Meyer, Thorsten

(57) **Abstract**

A flexible silicone thermal conductive composition includes a core thermal conductive composition, an insulating layer, and an isolating layer, from inside to outside. The core thermal conductive composition includes the following components by mass fraction: silicone base polymer 5-30%, silicone crosslinking agent 0.2-5%, silicone chain extender 1-8%, thermal conductive filler 60-93%, powder dispersant 0.1-1.2%, catalyst 0.02-0.2%, retarder 0.02-0.1%, and toughening agent 0.5-6%. The insulating layer includes the following components by mass fraction: silicone base polymer 85-95%, silicone crosslinking agent 0.2-8%, silicone chain extender 1-10%, dehydrating agent 0.1-0.5%, catalyst 0.05-0.15%, retarder 0.02-0.1%, and toughening agent 0.4-15%. The isolating layer includes the following components by mass fraction: metal oxide 95-99%, and powder dispersant 1-5%. The flexible silicone thermal conductive composition as thermal conductive gap filling materials in the range of 1-8 W/mk has ultra-high electrical insulation performance, wider gap filling range, and an extremely low oil bleeding rate.

## Description

### FIELD OF THE INVENTION

The present invention relates to the field of thermal conductive materials, particularly to a flexible silicone thermal conductive composition and a preparation method thereof.

### BACKGROUND OF THE INVENTION

In the current explosive information growth, the demand for electronic devices has increased exponentially, making thermal conductive filler materials of the thermal interface an indispensable key component in electronic device assembly. These materials play a crucial role in rapidly transferring heat from the heat-generating component to the heat-dissipating end, ensuring that electronic components operate within designed temperature limits, thereby preventing malfunctions caused by excessive heat and avoiding a sharp reduction in the lifespan of electronic devices due to prolonged exposure to high temperatures.

In the field of thermal interface filler materials, early solutions included thermal conductive silicone grease and thermal conductive pads. The thermal conductive silicone grease is only suitable for filling extremely thin and small gaps, but cannot serve as an insulating material, and also suffers from significant oil bleeding issues, which can contaminate other electronic components. Additionally, its long-term heat resistance is insufficient, which limits the application scenarios. For larger gaps, the thermal conductive pads are typically used, offering some insulation capability (3-10 kV/mm). These pads are cut into sheets and protected by release films on both surfaces. During assembly, workers manually peel off the release films and align the pads to designated positions. While the thermal conductive pads address some of the limitations of the thermal conductive silicone grease, but a certain degree of compressibility is still required, thus the thermal conductive pads use flexible materials but bring a lower overall crosslinking density. Consequently, oil bleeding risks still exist during application. Moreover, the manual operation required for the thermal conductive pads gradually fails to meet the modern requirements for intelligent and automated production. In addition to the above two types of thermal interface filler materials, a new form of thermal conductive material, thermal conductive silicone gel, has emerged in recent years. The thermal conductive silicone gel can be applied through automated dispensing, meeting the requirements for efficient production. However, it has an even lower degree of crosslinking and still suffers from oil bleeding, and it also cannot be used as an insulating material. Additionally, due to the difficulty and inconsistency of manual dispensing, it is unsuitable for small-scale manual operations.

Therefore, there is a need to develop and produce a new type of thermal conductive filler material that satisfies the requirements of both automated productions and small-scale manual operations. Such a material should effectively eliminate oil bleeding risks while meeting high-voltage insulation standards, aligning with the current and future industrial smart manufacturing needs for both performance and process compatibility.

### SUMMARY OF THE INVENTION

To address the problems in the existing technology, the present invention aims to provide a flexible silicone thermal conductive composition and a preparation method thereof. The flexible silicone thermal conductive composition of the present invention is compatible with both mechanical automated productions and manual operations, and possesses ultra-high electrical insulation performance, thermal reliability, and an extremely low oil bleeding rate.

The present invention provides the following technical solutions.

A flexible silicone thermal conductive composition includes a core thermal conductive composition, an insulating layer, and an isolating layer, from inside to outside.

The core thermal conductive composition includes the following components by mass fraction: silicone base polymer 5-30%, silicone crosslinking agent 0.2-5%, silicone chain extender 1-8%, thermal conductive filler 60-93%, powder dispersant 0.1-1.2%, catalyst 0.02-0.2%, retarder 0.02-0.1%, and toughening agent 0.5-6%.

The insulating layer includes the following components by mass fraction: silicone base polymer 85-95%, silicone crosslinking agent 0.2-8%, silicone chain extender 1-10%, dehydrating agent 0.1-0.5%, catalyst 0.05-0.15%, retarder 0.02-0.1%, and toughening agent 0.4-15%.

The isolating layer includes the following components by mass fraction: metal oxide 95-99%, and powder dispersant 1-5%.

Preferably, the core thermal conductive composition further includes a colorant with a mass fraction of 0.05-0.3%.

Further, a mass ratio of the core thermal conductive composition, the insulating layer, and the isolating layer is 100:(0.1-2):(0.05-0.9).

Further, a hydrogen content of the silicone crosslinking agent is 0.05-1.1%, and a molecular structure formula of the silicone crosslinking agent is shown in Formula (1): 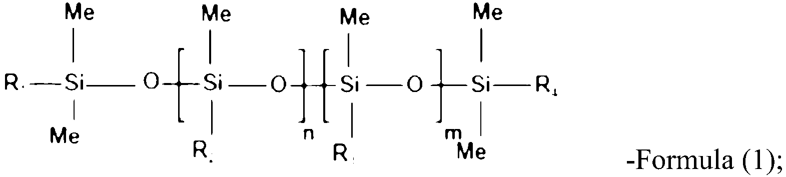 where R1, R2, and R4 are independently one or two selected from methyl and hydrogen, but are not all methyl simultaneously; R3 is methyl or phenyl; and n = 150-3000, m = 300-1500.

Further, a molecular structure formula of the silicone chain extender is shown in Formula (2): 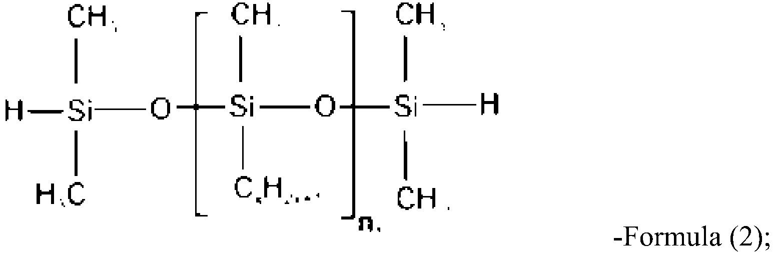 where n1=5-600, and x=1-18.

Further, the silicone base polymer is at least one selected from the group consisting of mono-terminal vinyl polydimethylsiloxane, di-terminal vinyl polydimethylsiloxane, mono-terminal vinyl polymethylphenylsiloxane, di-terminal vinyl polymethylphenylsiloxane, branched vinyl polydimethylsiloxane, and vinyl methyl silicone resin (VMQ silicone resin).

Preferably, in the core thermal conductive composition, when the silicone base polymer is at least one selected from the group consisting of mono-terminal vinyl polydimethylsiloxane, di-terminal vinyl polydimethylsiloxane, mono-terminal vinyl polymethylphenylsiloxane, and di-terminal vinyl polymethylphenylsiloxane, a vinyl content is 0.05-3%, and a kinematic viscosity is 40-20,000 cst. When the silicone base polymer is branched vinyl polydimethylsiloxane, a kinematic viscosity is 200-50,000 cst, and a vinyl content is 3-9%. When the silicone base polymer is VMQ silicone resin, the ratio of the monofunctional silicon-oxygen units (referred to as M units) to the tetrafunctional silicon-oxygen units (referred to as Q units) in the VMQ silicone resin (MQ ratio) is (0.5-0.85):1, and a vinyl content of MQ is 0.05-1.8%.

Preferably, in the insulating layer, a kinematic viscosity of the silicone base polymer is 1,000-150,000 cst. When the silicone base polymer is at least one selected from the group consisting of mono-terminal vinyl polydimethylsiloxane, di-terminal vinyl polydimethylsiloxane, mono-terminal vinyl polymethylphenylsiloxane, and di-terminal vinyl polymethylphenylsiloxane, a vinyl content is 0.02-1.2%. When the silicone base polymer is branched vinyl polydimethylsiloxane, a vinyl content is 3-9%. When the silicone base polymer is VMQ silicone resin, the MQ ratio in the VMQ silicone resin is (0.5-0.85):1, and a vinyl content of MQ is 0.05-1.8%.

Further, the thermal conductive filler includes large median particle size filler and small median particle size filler in a mass ratio of (1-5):1. The large median particle size filler has a median particle size of 30 - 200 µm, and the small median particle size filler has a median particle size of 0.1 - 15 µm. The large median particle size filler is selected from at least one of ceramic alumina, aluminum hydroxide, diamond, aluminum nitride, boron nitride, and magnesium oxide. The small median particle size filler includes at least one of ceramic alumina, zinc oxide, silicon nitride, and aluminum nitride.

Further, the thermal conductive filler includes two or more combinations of flake, prismatic, ellipsoidal, or quasi-spherical shapes.

Further, a molecular structure formula of the powder dispersant is R-Si(OR)₃, where R is a straight-chain alkyl group with 8-16 carbon atoms.

Further, the catalyst is a platinum coordination catalyst with a molecular structure formula as shown in Formula (3): 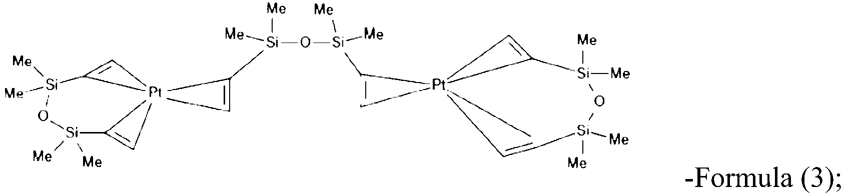 where a concentration of the platinum coordination catalyst is 200-9000 ppm.

Further, a molecular structure formula of the retarder is [CH₃(CH₂=CH)SiO]ₙ₂, where n2=4-8, and a purity is ≥96%.

Further, the colorant can be an organic colorant or an inorganic colorant, with color unlimited.

Further, the toughening agent is selected from at least one of fumed silica, a base material mainly composed of fumed silica, and methyl silicone resin (MQ silicone resin).

Further, a molecular structure formula of the dehydrating agent is CH₂=CHSi(R5)₃, where R5 is methoxy or ethoxy.

Further, the metal oxide is selected from at least one of aluminium oxide, zinc oxide and silicon dioxide, and a particle size of the metal oxide is 0.05-1 µm.

The present invention further provides method for preparing the flexible silicone thermal conductive composition, including the following steps:
S1, Preparation of a core thermal conductive composition premix: mixing and stirring the silicone base polymer, the silicone crosslinking agent, the silicone chain extender, the powder dispersant, retarder, the toughening agent, the colorant, and the thermal conductive filler according to a component proportion of the core thermal conductive composition for 15-80 minutes, adding the catalyst, and continuing stirring for 5-60 minutes until uniform to obtain an core thermal conductive composition premix; wherein the stirring speed is 20-200 rpm;
S2, Preparation of an insulating layer premix: vacuum heating the silicone base polymer according to a component proportion of the insulating layer to 100-160°C, stirring at a speed of 10-100 rpm for 10-60 minutes to obtain a dried silicone base polymer, cooling the temperature to below 30°C, mixing and stirring with the silicone crosslinking agent, the silicone chain extender, the dehydrating agent, and the retarder at a speed of 10-100 rpm for 7-60 minutes, adding the catalyst, and continuing stirring for 3-30 minutes to mix evenly to obtain an insulating layer premix;
S3, Preparation of an isolating layer premix: heating the metal oxide and the powder dispersant according to a component proportion of the isolating layer to 60-80°C, and stirring at a speed of 300-1500 rpm for 3-40 minutes to mix evenly to obtain an isolating layer premix;
S4, Heating the core thermal conductive composition premix at 50-70°C for pre-curing, extruding through an orifice with a diameter of 5-80 mm at an extrusion speed of 15-90 g/min to form microspheres, then heating to fully cure, to obtain core thermal conductive composition microspheres;
S5, Uniformly spraying the insulating layer premix onto the core thermal conductive composition microspheres, then heating to fully cure, to obtain insulated thermal conductive microspheres;
S6, Blowing the isolating layer premix into a space with an airflow to maintain a concentration of 50-1600 g/m³, passing the insulated thermal conductive microspheres through the above space to evenly coat the surfaces of the insulated thermal conductive microspheres with the isolating layer premix, to obtain a flexible silicone thermal conductive composition.

Based on the above technical solutions, the present invention achieves the following effects.

The flexible silicone thermal conductive composition of the present invention, as thermal conductive gap filling materials in the range of 1-8 W/mk, has extremely low oil bleeding rate and higher electrical insulation strength compared to other thermal conductive materials. The gap filling range is also wider, meeting the requirements for both automated production and small-scale manual operations, and the application modes are more flexible.

### BRIEF DESCRIPTION OF THE DRAWINGS

To more clearly illustrate the technical solutions of the embodiments of the present invention, a brief introduction to the drawings used in the description of the embodiments is provided below. It should be apparent that the drawings described below are some embodiments of the present invention. For those of ordinary skill in the art, other drawings can be obtained from these drawings without creative work.

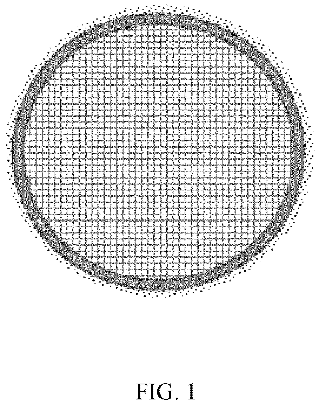

FIG. 1 is a schematic diagram of the flexible silicone thermal conductive composition provided by the present invention.

### DETAILED DESCRIPTION OF ILLUSTRATED EMBODIMENTS

The technical solutions of the present invention will be described clearly and completely below in conjunction with embodiments of the invention. It is apparent that the described embodiments represent only some, rather than all, embodiments of the present invention. Based on the embodiments of the present invention, all other embodiments obtained by persons of ordinary skill in the art without creative efforts shall fall within the protection scope of the present invention.

It should be understood that when used in this specification and the appended claims, the terms "comprise"/"comprising" and "include"/"including" indicate the presence of the described features, entities, steps, operations, elements, and/or components, but do not exclude the presence or addition of one or more other features, entities, steps, operations, elements, components, and/or combinations thereof.

It should also be understood that the terminology used in the description of the present invention is for the purpose of describing particular embodiments only and is not intended to limit the invention. As used in this specification and the appended claims, the singular forms "a", "an", and "the" are intended to include plural referents unless the context clearly dictates otherwise.

It should be further understood that the term "and/or" as used in this specification and the appended claims refers to any and all possible combinations of one or more of the associated listed items, and includes such combinations.

### Example 1

A flexible silicone thermal conductive composition, as shown in FIG. 1, includes a core thermal conductive composition, an insulating layer, and an isolating layer, from inside to outside.

The core thermal conductive composition includes the following components by mass fraction: silicone base polymer 15%, silicone crosslinking agent 2.2%, silicone chain extender 3.8%, thermal conductive filler 76.6%, powder dispersant 0.55%, catalyst 0.12%, retarder 0.05%, colorant 0.18%, and toughening agent 1.5%.

The insulating layer includes the following components by mass fraction: silicone base polymer 90%, silicone crosslinking agent 3%, silicone chain extender 6%, dehydrating agent 0.2%, catalyst 0.08%, retarder 0.03%, and toughening agent 0.69%.

The isolating layer includes the following components by mass fraction: metal oxide 98%, and powder dispersant 2%.

Specifically, the silicone base polymer in the core thermal conductive composition is a di-terminal vinyl polydimethylsiloxane with a vinyl content of 0.14% and a viscosity of 10,000 cst. The silicone base polymer in the insulating layer is a di-terminal vinyl polydimethylsiloxane with a vinyl content of 0.138% and a viscosity of 5,000 cst.

Specifically, the molecular structure formula of the silicone crosslinking agent in the core thermal conductive composition is shown in Formula (1), where R1, R2, and R4 are hydrogen groups, R3 is a methyl group; and n=2000, m=900. The molecular structure formula of the silicone crosslinking agent in the insulating layer is shown in Formula (1), where R1 and R2 are hydrogen groups, R3 and R4 are methyl groups; and n=300, m=500.

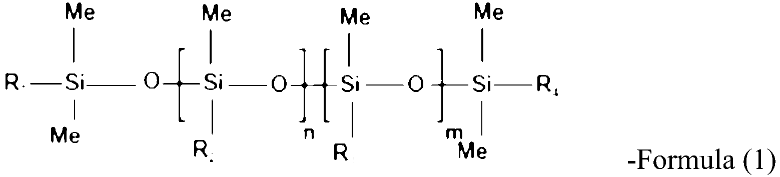

Specifically, the molecular structure formula of the silicone chain extender in the core thermal conductive composition is shown in Formula (2), where n1=120, x=10. The molecular structure formula of the silicone chain extender in the insulating layer is shown in Formula (2), where n1=210, x=10.

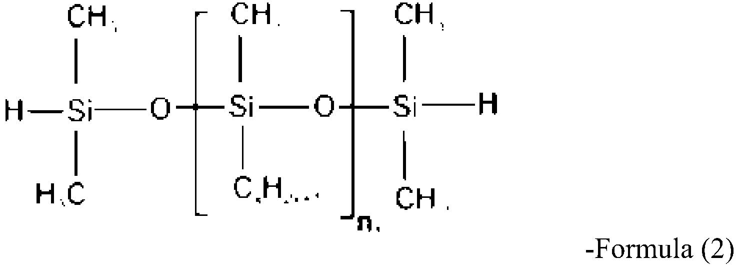

The molecular structure formula of the powder dispersant is R-Si(OR)₃, where R is a straight-chain alkyl group with 12 carbon atoms (C12).

The molecular structure formula of the retarder is [CH₃(CH₂=CH)SiO]₄.

The toughening agent in the core thermal conductive composition is fumed silica. The toughening agent in the insulating layer is an MQ silicone resin.

The colorant is an organic colorant.

The thermal conductive filler is a mixture of quasi-spherical alumina with a median particle size of 75 µm and prismatic zinc oxide with a median particle size of 0.9 µm. The mass percentages are as follows: alumina 60%, and zinc oxide 16.6%.

The molecular structure formula of the catalyst is shown in Formula (3), the concentration of the catalyst in the core thermal conductive composition is 1500 ppm, and the concentration of the catalyst in the insulating layer is 5000 ppm.

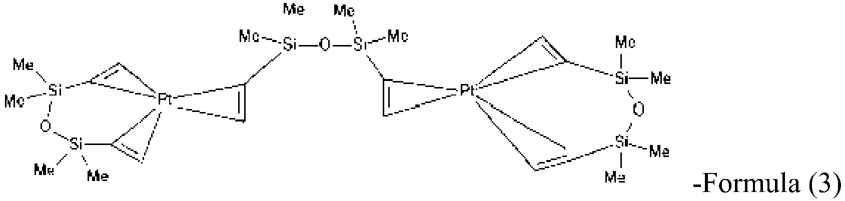

The molecular structure formula of the dehydrating agent is CH₂=CHSi(CH₃O)₃.

The metal oxide is alumina with a median particle size of 0.8 µm.

A method for preparing the above flexible silicone thermal conductive composition includes the following steps:
S1, Preparation of a core thermal conductive composition premix: mixing and stirring the silicone base polymer, the silicone crosslinking agent, the silicone chain extender, the powder dispersant, retarder, the toughening agent, the colorant, and the thermal conductive filler according to the component proportion of the core thermal conductive composition in a planetary mixer for 30 minutes, adding the catalyst, and continuing stirring for 20 minutes until uniform to obtain an core thermal conductive composition premix; wherein the stirring speed is 120 rpm;
S2, Preparation of an insulating layer premix: vacuum heating the silicone base polymer according to the component proportion of the insulating layer to 110°C, stirring at a speed of 30 rpm for 40 minutes to obtain a dried silicone base polymer, cooling the temperature to below 30°C, mixing and stirring with the silicone crosslinking agent, the silicone chain extender, the dehydrating agent, and the retarder at a speed of 40 rpm for 10 minutes, adding the catalyst, and continuing stirring for 10 minutes to mix evenly to obtain an insulating layer premix;
S3, Preparation of an isolating layer premix: heating the metal oxide and the powder dispersant according to the component proportion of the isolating layer to 68°C, and stirring at a speed of 800 rpm for 12 minutes to mix evenly to obtain an isolating layer premix;
S4, Heating the core thermal conductive composition premix at 58°C for pre-curing, extruding through an orifice with a diameter of 32 mm at an extrusion speed of 280 g/min to form microspheres, then rolling at a speed of 3.5 m/min into a first-stage heating tunnel furnace and heating to 125 °C to fully cure, to obtain core thermal conductive composition microspheres;
S5, Uniformly spraying the insulating layer premix onto the core thermal conductive composition microspheres at a spray speed of 25 g/min, then rolling at a speed of 4 m/min into a second-stage heating tunnel furnace and heating to 130°C to fully cure, to obtain insulated thermal conductive microspheres;
S6, Blowing the isolating layer premix into a nearly confined tunnel space with an airflow to maintain a concentration of 800 g/m³, passing the insulated thermal conductive microspheres through the above space at a conveying speed of 6 m/min to evenly coat the surfaces of the insulated thermal conductive microspheres with the isolating layer premix, to obtain a flexible silicone thermal conductive composition.

### Example 2

A flexible silicone thermal conductive composition includes a core thermal conductive composition, an insulating layer, and an isolating layer, from inside to outside.

The core thermal conductive composition includes the following components by mass fraction: silicone base polymer 5%, silicone crosslinking agent 0.2%, silicone chain extender 1.0%, thermal conductive filler 93%, powder dispersant 0.15%, catalyst 0.06%, retarder 0.03%, colorant 0.06%, and toughening agent 0.5%_{∘}

The insulating layer includes the following components by mass fraction: silicone base polymer 92%, silicone crosslinking agent 1.6%, silicone chain extender 5%, dehydrating agent 0.3%, catalyst 0.09%, retarder 0.04%, and toughening agent 0.97%.

The isolating layer includes the following components by mass fraction: metal oxide 96%, and powder dispersant 4%.

Specifically, the silicone base polymer in the core thermal conductive composition is a mixture of mono-terminal vinyl polydimethylsiloxane with a vinyl content of 1.21% and a viscosity of 110 cst, and branched vinyl polydimethylsiloxane with a vinyl content of 9% and a viscosity of 300 cst. The silicone base polymer in the insulating layer is a mixture of mono-terminal vinyl polymethylphenylsiloxane with a vinyl content of 0.138% and a viscosity of 10,000 cst, and di-terminal vinyl polymethylphenylsiloxane with a vinyl content of 0.115% and a viscosity of 15,000 cst.

Specifically, the molecular structure formula of the silicone crosslinking agent in the core thermal conductive composition is shown in Formula (1), where R2 is a hydrogen group, R1, R3, and R4 are methyl groups; and n=260, m=400. The molecular structure formula of the silicone crosslinking agent in the insulating layer is shown in Formula (1), where R2 is a hydrogen group, R1 and R4 are methyl groups, R3 is a phenyl group; and n=300, m=500.

Specifically, the molecular structure formula of the silicone chain extender in the core thermal conductive composition is shown in Formula (2), where n1=60, x=12. The molecular structure formula of the silicone chain extender in the insulating layer is shown in Formula (2), where n1=30, x=4.

The molecular structure formula of the powder dispersant is R-Si(OR)₃, where in the core thermal conductive composition, R is a straight-chain alkyl group with 16 carbon atoms (C16); while in the isolating layer, R is a straight-chain alkyl group with 8 carbon atoms (C8).

The molecular structure formula of the retarder in the core thermal conductive composition is [CH₃(CH₂=CH)SiO]₆, and the molecular structure formula of the retarder in the insulating layer is [CH₃(CH₂=CH)SiO]₄.

The toughening agent is a base material mainly composed of fumed silica.

The colorant is an organic colorant.

The thermal conductive filler is a mixture of quasi-spherical aluminum nitride with a median particle size of 120 µm and prismatic ceramic alumina with a median particle size of 2 µm, where the mass percentage of aluminum nitride is 58%, and the mass percentage of ceramic alumina is 35%.

The molecular structure formula of the catalyst is shown in Formula (3), the concentration of the catalyst in the core thermal conductive composition is 6000 ppm, and the concentration of the catalyst in the insulating layer is 2000 ppm.

The molecular structure formula of the dehydrating agent is CH₂=CHSi(C₂H₅O)₃.

The metal oxide is zinc oxide with a median particle size of 0.2 µm.

A method for preparing the above flexible silicone thermal conductive composition includes the following steps:
S1, Preparation of a core thermal conductive composition premix: mixing and stirring the silicone base polymer, the silicone crosslinking agent, the silicone chain extender, the powder dispersant, retarder, the toughening agent, the colorant, and the thermal conductive filler according to the component proportion of the core thermal conductive composition in a planetary mixer for 50 minutes, adding the catalyst according to the component proportion, and continuing stirring for 50 minutes until uniform to obtain a core thermal conductive composition premix; wherein the stirring speed is 60 rpm;
S2, Preparation of an insulating layer premix: vacuum heating the silicone base polymer according to the component proportion of the insulating layer to 150°C, stirring at a speed of 70 rpm for 50 minutes to obtain a dried silicone base polymer, cooling the temperature to below 30°C, mixing and stirring with the silicone crosslinking agent, the silicone chain extender, the dehydrating agent, and the retarder at a speed of 80 rpm for 20 minutes, adding the catalyst, and continuing stirring for 10 minutes to mix evenly to obtain an insulating layer premix;
S3, Preparation of an isolating layer premix: heating the metal oxide and the powder dispersant according to the component proportion of the isolating layer to 75°C, and stirring at a speed of 1200 rpm for 5 minutes to mix evenly to obtain an isolating layer premix;
S4, Heating the core thermal conductive composition premix to 65°C for pre-curing, extruding through an orifice with a diameter of 15 mm at an extrusion speed of 120 g/min to form microspheres, then rolling at a speed of 0.6 m/min into a first-stage heating tunnel furnace and heating to 140°C to fully cure, to obtain core thermal conductive composition microspheres;
S5, Uniformly spraying the insulating layer premix onto the core thermal conductive composition microspheres at a spray speed of 10 g/min, then rolling at a speed of 0.9 m/min into a second-stage heating tunnel furnace and heating to 110°C to fully cure, to obtain insulated thermal conductive microspheres;
S6, Blowing the isolating layer premix into a nearly confined tunnel space with an airflow to maintain a concentration of 60 g/m³, passing the insulated thermal conductive microspheres through the above space at a conveying speed of 2 m/min to evenly coat the surfaces of the insulated thermal conductive microspheres with the isolating layer premix, to obtain a flexible silicone thermal conductive composition.

### Example 3

A flexible silicone thermal conductive composition includes a core thermal conductive composition, an insulating layer, and an isolating layer, from inside to outside.

The core thermal conductive composition includes the following components by mass fraction: silicone base polymer 30%, silicone crosslinking agent 4.8%, silicone chain extender 3.6%, thermal conductive filler 60%, powder dispersant 0.1%, catalyst 0.2%, retarder 0.02%, and toughening agent 1.28%.

The insulating layer includes the following components by mass fraction: silicone base polymer 85%, silicone crosslinking agent 0.2%, silicone chain extender 1.3%, dehydrating agent 0.3%, catalyst 0.15%, retarder 0.05%, and toughening agent 13%.

The isolating layer includes the following components by mass fraction: metal oxide 99%, and powder dispersant 1%.

Specifically, the silicone base polymer in the core thermal conductive composition is a mixture of branched vinyl polydimethylsiloxane with a vinyl content of 3% and a viscosity of 50,000 cst, and VMQ silicone resin with a vinyl content of 1.8% and an MQ ratio of 0.5:1. The silicone base polymer in the insulating layer is mono-terminal vinyl polydimethylsiloxane with a vinyl content of 0.08% and a viscosity of 20,000 cst.

Specifically, the molecular structure formula of the silicone crosslinking agent in the core thermal conductive composition is shown in Formula (1), where R4 is a hydrogen group, R3 is a phenyl group, and R1 and R2 are methyl groups; and n=3000, m=300. The molecular structure formula of the silicone crosslinking agent in the insulating layer is shown in Formula (1), where R1 is a hydrogen group, and R2, R3, and R4 are methyl groups; and n=500, m=700.

Specifically, the molecular structure formula of the silicone chain extender in the core thermal conductive composition is shown in Formula (2), where n1=5 and x=18. The molecular structure formula of the silicone chain extender in the insulating layer is shown in Formula (2), where n1=300 and x=10.

The molecular structure formula of the powder dispersant is R-Si(OR)₃, where in the core thermal conductive composition, R is a straight-chain alkyl group with 8 carbon atoms (C8); while in the isolating layer, R is a straight-chain alkyl group with 10 carbon atoms (C10).

The molecular structure formula of the retarder in the core thermal conductive composition is [CH₃(CH₂=CH)SiO]₈. The molecular structure formula of the retarder in the insulating layer is [CH₃(CH₂=CH)SiO]₅.

The toughening agent is fumed silica.

The thermal conductive filler includes prismatic aluminum nitride with a median particle size of 130 µm, flaky ceramic alumina with a median particle size of 30 µm, and quasi-spherical aluminum nitride with a median particle size of 0.1 µm. The mass percentages are as follows: prismatic aluminum nitride 30%, flaky ceramic alumina 20%, and quasi-spherical aluminum nitride 10%.

The molecular structure formula of the catalyst is shown in Formula (3). The concentration of the catalyst in the core thermal conductive composition is 200 ppm. The concentration of the catalyst in the insulating layer is 500 ppm.

The molecular structure formula of the dehydrating agent is CH₂=CHSi(C₂H₅O)₃.

The metal oxide includes the following components by mass content: aluminum oxide 29%, zinc oxide 20%, and silica 50%. The median particle sizes are as follows: aluminum oxide 0.05 µm, zinc oxide 0.5 µm, and silica 1 µm.

A method for preparing the above flexible silicone thermal conductive composition includes the following steps:
S1, Preparation of a core thermal conductive composition premix: mixing and stirring the silicone base polymer, the silicone crosslinking agent, the silicone chain extender, the powder dispersant, retarder, the toughening agent, and the thermal conductive filler according to the component proportion of the core thermal conductive composition in a planetary mixer for 60 minutes, adding the catalyst, and continuing stirring for 60 minutes until uniform to obtain a core thermal conductive composition premix; wherein the stirring speed is 20 rpm;
S2, Preparation of an insulating layer premix: vacuum heating the silicone base polymer according to the component proportion of the insulating layer to 120°C, stirring at a speed of 10 rpm for 60 minutes to obtain a dried silicone base polymer, cooling the temperature to below 30°C, mixing and stirring with the silicone crosslinking agent, the silicone chain extender, the dehydrating agent, and the retarder at a speed of 60 rpm for 30 minutes, adding the catalyst, and continuing stirring for 10 minutes to mix evenly to obtain an insulating layer premix;
S3, Preparation of an isolating layer premix: heating the metal oxide and the powder dispersant according to the component proportion of the isolating layer to 60°C, and stirring at a speed of 1500 rpm for 3 minutes to mix evenly to obtain an isolating layer premix;
S4, Heating the core thermal conductive composition premix to 50°C for pre-curing, extruding through an orifice with a diameter of 5 mm at an extrusion speed of 15 g/min to form microspheres, then rolling at a speed of 0.1 m/min into a first-stage heating tunnel furnace and heating to 120°C to fully cure, to obtain core thermal conductive composition microspheres;
S5, Uniformly spraying the insulating layer premix onto the core thermal conductive composition microspheres at a spray speed of 0.5 g/min, then rolling at a speed of 5.5 m/min into a second-stage heating tunnel furnace and heating to 100°C to fully cure, to obtain insulated thermal conductive microspheres;
S6, Blowing the isolating layer premix into a nearly confined tunnel space with an airflow to maintain a concentration of 1600 g/m³, passing the insulated thermal conductive microspheres through the above space at a conveying speed of 20 m/min to evenly coat the surfaces of the insulated thermal conductive microspheres with the isolating layer premix, to obtain a flexible silicone thermal conductive composition.

### Example 4

A flexible silicone thermal conductive composition includes a core thermal conductive composition, an insulating layer, and an isolating layer, from inside to outside.

The core thermal conductive composition includes the following components by mass fraction: silicone base polymer 18%, silicone crosslinking agent 5%, silicone chain extender 8%, thermal conductive filler 65%, powder dispersant 0.5%, catalyst 0.1%, retarder 0.05%, colorant 0.05%, and toughening agent 3.3%.

The insulating layer includes the following components by mass fraction: silicone base polymer 95%, silicone crosslinking agent 1.43%, silicone chain extender 3%, dehydrating agent 0.1%, catalyst 0.05%, retarder 0.02%, and toughening agent 0.4%.

The isolating layer includes the following components by mass fraction: metal oxide 98%, and powder dispersant 2%.

Specifically, the silicone base polymer in the core thermal conductive composition is a mixture of mono-terminal vinyl polymethylphenylsiloxane with a vinyl content of 0.05% and a viscosity of 20,000 cst, and di-terminal vinyl polymethylphenylsiloxane with a vinyl content of 3% and a viscosity of 1,000 cst. The silicone base polymer in the insulating layer is a mixture of di-terminal vinyl polydimethylsiloxane with a vinyl content of 1.2% and a viscosity of 150,000 cst, and di-terminal vinyl polydimethylsiloxane with a vinyl content of 0.02% and a viscosity of 20,000 cst.

Specifically, the molecular structure formula of the silicone crosslinking agent in the core thermal conductive composition is shown in Formula (1), where R1 and R4 are hydrogen groups, and R2 and R3 are methyl groups; and n=2500, m=600. The molecular structure formula of the silicone crosslinking agent in the insulating layer is shown in Formula (1), where R2 and R4 are hydrogen groups, R1 is a methyl group, and R3 is a phenyl group; and n=1000, m=1500.

Specifically, the molecular structure formula of the silicone chain extender in the core thermal conductive composition is shown in Formula (2), where n1=600 and x=1. The molecular structure formula of the silicone chain extender in the insulating layer is shown in Formula (2), where n1=260 and x=9.

The molecular structure formula of the powder dispersant is R-Si(OR)₃. In the core thermal conductive composition, R is a straight-chain alkyl group with 11 carbon atoms (C11). In the isolating layer, R is a straight-chain alkyl group with 12 carbon atoms (C12).

The molecular structure formula of the retarder in the core thermal conductive composition is [CH₃(CH₂=CH)SiO]₄. The molecular structure formula of the retarder in the insulating layer is [CH₃(CH₂=CH)SiO]₄.

The toughening agent in the core thermal conductive composition is MQ silicone resin. The toughening agent in the isolating layer is a base material mainly composed of fumed silica.

The colorant is an inorganic colorant.

The thermal conductive filler includes prismatic boron nitride with a median particle size of 160 µm, diamond with a median particle size of 50 µm, and ellipsoidal silicon nitride with a median particle size of 0.5 µm. The mass percentages are as follows: boron nitride 40%, diamond 10%, and silicon nitride 15%.

The molecular structure formula of the catalyst is shown in Formula (3). The concentration of the catalyst in the core thermal conductive composition is 9000 ppm. The concentration of the catalyst in the insulating layer is 3000 ppm.

The molecular structure formula of the dehydrating agent is CH₂=CHSi(CH₃O)₃.

The metal oxide includes aluminum oxide and zinc oxide with a median particle size of 0.6 µm. The mass percentages are as follows: aluminum oxide 52% and zinc oxide 46%.

A method for preparing the above flexible silicone thermal conductive composition includes the following steps:
S1, Preparation of a core thermal conductive composition premix: mixing and stirring the silicone base polymer, the silicone crosslinking agent, the silicone chain extender, the powder dispersant, retarder, the toughening agent, the colorant, and the thermal conductive filler according to the component proportion of the core thermal conductive composition in a planetary mixer for 60 minutes, adding the catalyst, and continuing stirring for 40 minutes until uniform to obtain a core thermal conductive composition premix; wherein the stirring speed is 100 rpm;
S2, Preparation of an insulating layer premix: vacuum heating the silicone base polymer according to the component proportion of the insulating layer to 100°C, stirring at a speed of 60 rpm for 30 minutes to obtain a dried silicone base polymer, cooling the temperature to below 30°C, mixing and stirring with the silicone crosslinking agent, the silicone chain extender, the dehydrating agent, and the retarder at a speed of 100 rpm for 7 minutes, adding the catalyst, and continuing stirring for 3 minutes to mix evenly to obtain an insulating layer premix;
S3, Preparation of an isolating layer premix: heating the metal oxide and the powder dispersant according to the component proportion of the isolating layer to 70°C, and stirring at a speed of 600 rpm for 20 minutes to mix evenly to obtain an isolating layer premix;
S4, Heating the core thermal conductive composition premix to 67°C for pre-curing, extruding through an orifice with a diameter of 30 mm at an extrusion speed of 30 g/min to form microspheres, then rolling at a speed of 6.5 m/min into a first-stage heating tunnel furnace and heating to 150°C to fully cure, to obtain core thermal conductive composition microspheres;
S5, Uniformly spraying the insulating layer premix onto the core thermal conductive composition microspheres at a spray speed of 30 g/min, then rolling at a speed of 0.1 m/min into a second-stage heating tunnel furnace and heating to 120°C to fully cure, to obtain insulated thermal conductive microspheres;
S6, Blowing the isolating layer premix into a nearly confined tunnel space with an airflow to maintain a concentration of 1000 g/m³, passing the insulated thermal conductive microspheres through the above space at a conveying speed of 12 m/min to evenly coat the surfaces of the insulated thermal conductive microspheres with the isolating layer premix, to obtain a flexible silicone thermal conductive composition.

### Example 5

A flexible silicone thermal conductive composition includes a core thermal conductive composition, an insulating layer, and an isolating layer, from inside to outside.

The core thermal conductive composition includes the following components by mass fraction: silicone base polymer 12%, silicone crosslinking agent 3.6%, silicone chain extender 1.18%, thermal conductive filler 80%, powder dispersant 1.2%, catalyst 0.02%, retarder 0.1%, colorant 0.3%, and toughening agent 1.6%.

The insulating layer includes the following components by mass fraction: silicone base polymer 88%, silicone crosslinking agent 8%, silicone chain extender 1%, dehydrating agent 0.5%, catalyst 0.1%, retarder 0.1%, and toughening agent 2.3%.

The isolating layer includes the following components by mass fraction: metal oxide 97%, and powder dispersant 3%.

Specifically, the silicone base polymer in the core thermal conductive composition is a mixture of di-terminal vinyl polydimethylsiloxane with a vinyl content of 0.87% and a viscosity of 1,500 cst, and branched vinyl polydimethylsiloxane with a vinyl content of 6.78% and a viscosity of 200 cst. The silicone base polymer in the insulating layer is branched vinyl polydimethylsiloxane with a vinyl content of 5.66% and a viscosity of 30,000 cst.

Specifically, the molecular structure formula of the silicone crosslinking agent in the core thermal conductive composition is shown in Formula (1), where R3 is a phenyl group, and R1, R2, and R4 are hydrogen groups; and n=200, m=1200. The molecular structure formula of the silicone crosslinking agent in the insulating layer is shown in Formula (1), where R1 and R2 are hydrogen groups, and R3 and R4 are methyl groups; and n=150, m=600.

Specifically, the molecular structure formula of the silicone chain extender in the core thermal conductive composition is shown in Formula (2), where n1=80 and x=16. The molecular structure formula of the silicone chain extender in the insulating layer is shown in Formula (2), where n1=10 and x=6.

The molecular structure formula of the powder dispersant is R-Si(OR)₃. In the core thermal conductive composition, R is a straight-chain alkyl group with 9 carbon atoms (C9). In the isolating layer, R is a straight-chain alkyl group with 8 carbon atoms (C8).

The molecular structure formula of the retarder in the core thermal conductive composition is [CH₃(CH₂=CH)SiO]₈. The molecular structure formula of the retarder in the insulating layer is [CH₃(CH₂=CH)SiO]₆.

The toughening agent in the core thermal conductive composition is a base material mainly composed of fumed silica. The toughening agent in the insulating layer is fumed silica.

The colorant is an organic colorant.

The thermal conductive filler includes ellipsoidal aluminum hydroxide with a median particle size of 200 µm, boron nitride with a median particle size of 200 µm, magnesium oxide with a median particle size of 200 µm, quasi-spherical zinc oxide with a median particle size of 15 µm, and silicon nitride with a median particle size of 15 µm. The mass percentages are as follows: aluminum hydroxide 20%, boron nitride 10%, magnesium oxide 10%, zinc oxide 20%, and silicon nitride 20%.

The molecular structure formula of the catalyst is shown in Formula (3). The concentration of the catalyst in the core thermal conductive composition is 3000 ppm. The concentration of the catalyst in the insulating layer is 800 ppm.

The molecular structure formula of the dehydrating agent is CH₂=CHSi(CH₃O)₃.

The metal oxide includes silica with a median particle size of 0.5 µm.

A method for preparing the above flexible silicone thermal conductive composition includes the following steps:
S1, Preparation of a core thermal conductive composition premix: mixing and stirring the silicone base polymer, the silicone crosslinking agent, the silicone chain extender, the powder dispersant, retarder, the toughening agent, the colorant, and the thermal conductive filler according to the component proportion of the core thermal conductive composition in a planetary mixer for 15 minutes, adding the catalyst, and continuing stirring for 5 minutes until uniform to obtain a core thermal conductive composition premix; wherein the stirring speed is 200 rpm;
S2, Preparation of an insulating layer premix: vacuum heating the silicone base polymer according to the component proportion of the insulating layer to 120°C, stirring at a speed of 80 rpm for 10 minutes to obtain a dried silicone base polymer, cooling the temperature to below 30°C, mixing and stirring with the silicone crosslinking agent, the silicone chain extender, the dehydrating agent, and the retarder at a speed of 50 rpm for 12 minutes, adding the catalyst, and continuing stirring for 8 minutes to mix evenly to obtain an insulating layer premix;
S3, Preparation of an isolating layer premix: heating the metal oxide and powder dispersant according to the component proportion of the isolating layer to 80°C, and stirring at a speed of 300 rpm for 40 minutes to mix evenly to obtain an isolating layer premix;
S4, Heating the core thermal conductive composition premix to 60°C for pre-curing, extruding through an orifice with a diameter of 25 mm at an extrusion speed of 200 g/min to form microspheres, then rolling at a speed of 5 m/min into a first-stage heating tunnel furnace and heating to 100°C to fully cure, to obtain core thermal conductive composition microspheres;
S5, Uniformly spraying the insulating layer premix onto the core thermal conductive composition microspheres at a spray speed of 10 g/min, then rolling at a speed of 2 m/min into a second-stage heating tunnel furnace and heating to 150°C to fully cure, to obtain insulated thermal conductive microspheres;
S6, Blowing the isolating layer premix into a nearly confined tunnel space with an airflow to maintain a concentration of 50 g/m³, passing the insulated thermal conductive microspheres through the above space at a conveying speed of 1 m/min to evenly coat the surfaces of the insulated thermal conductive microspheres with the isolating layer premix, to obtain a flexible silicone thermal conductive composition.

### Example 6

A flexible silicone thermal conductive composition includes a core thermal conductive composition, an insulating layer, and an isolating layer, from inside to outside.

The core thermal conductive composition includes the following components by mass fraction: silicone base polymer 22%, silicone crosslinking agent 2.1%, silicone chain extender 2.8%, thermal conductive filler 66%, powder dispersant 0.6%, catalyst 0.15%, retarder 0.08%, colorant 0.27%, and toughening agent 6%.

The insulating layer includes the following components by mass fraction: silicone base polymer 90%, silicone crosslinking agent 0.2%, silicone chain extender 4%, dehydrating agent 0.4%, catalyst 0.14%, retarder 0.06%, and toughening agent 5.2%.

The isolating layer includes the following components by mass fraction: metal oxide 95%, and powder dispersant 5%.

Specifically, the silicone base polymer in the core thermal conductive composition is VMQ silicone resin with a vinyl content of 1% and an MQ ratio of 0.85:1. The silicone base polymer in the insulating layer is VMQ silicone resin with a vinyl content of 0.85% and an MQ ratio of 0.8:1.

Specifically, the molecular structure formula of the silicone crosslinking agent in the core thermal conductive composition is shown in Formula (1), where R1, R2, and R4 are hydrogen groups, and R3 is a methyl group; and n=1600, m=1000. The molecular structure formula of the silicone crosslinking agent in the insulating layer is shown in Formula (1), where R1 and R2 are hydrogen groups, and R3 and R4 are methyl groups; and n=200, m=360.

Specifically, the molecular structure formula of the silicone chain extender in the core thermal conductive composition is shown in Formula (2), where n1=400 and x=12. The molecular structure formula of the silicone chain extender in the insulating layer is shown in Formula (2), where n1=200 and x=2.

The molecular structure formula of the powder dispersant is R-Si(OR)₃. In the core thermal conductive composition, R is a straight-chain alkyl group with 15 carbon atoms (C15). In the isolating layer, R is a straight-chain alkyl group with 16 carbon atoms (C16).

The molecular structure formula of the retarder in the core thermal conductive composition is [CH₃(CH₂=CH)SiO]₆. The molecular structure formula of the retarder in the insulating layer is [CH₃(CH₂=CH)SiO]₆.

The toughening agent in the core thermal conductive composition is fumed silica. The toughening agent in the isolating layer is MQ silicone resin.

The colorant is an organic colorant.

The thermal conductive filler includes quasi-spherical ceramic alumina with a median particle size of 80 µm and prismatic ceramic alumina with a median particle size of 0.6 µm. The mass percentages are as follows: aluminum nitride 48%, ceramic alumina 18%.

The molecular structure formula of the catalyst is shown in Formula (3). The concentration of the catalyst in the core thermal conductive composition is 6000 ppm. The concentration of the catalyst in the insulating layer is 1000 ppm.

The molecular structure formula of the dehydrating agent is CH₂=CHSi(CH₃O)₃.

The metal oxide is aluminum oxide with a median particle size of 0.8 µm.

A method for preparing the above flexible silicone thermal conductive composition includes the following steps:
S1, Preparation of a core thermal conductive composition premix: mixing and stirring the silicone base polymer, the silicone crosslinking agent, the silicone chain extender, the powder dispersant, the retarder, the toughening agent, the colorant, and the thermal conductive filler according to the component proportion of the core thermal conductive composition in a planetary mixer for 40 minutes, adding the catalyst, and continuing stirring for 20 minutes until uniform to obtain a core thermal conductive composition premix; wherein the stirring speed is 180 rpm;
S2, Preparation of an insulating layer premix: vacuum heating the silicone base polymer according to the component proportion of the insulating layer to 160°C, stirring at a speed of 100 rpm for 12 minutes to obtain a dried silicone base polymer, cooling the temperature to below 30°C, mixing and stirring with the silicone crosslinking agent, the silicone chain extender, the dehydrating agent, and the retarder at a speed of 10 rpm for 40 minutes, adding the catalyst, and continuing stirring for 20 minutes to mix evenly to obtain an insulating layer premix;
S3, Preparation of an isolating layer premix: heating the metal oxide and powder dispersant according to the component proportion of the isolating layer to 60°C, and stirring at a speed of 1000 rpm for 8 minutes to mix evenly to obtain an isolating layer premix;
S4, Heating the core thermal conductive composition premix to 70°C for pre-curing, extruding through an orifice with a diameter of 80 mm at an extrusion speed of 900 g/min to form microspheres, then rolling at a speed of 10 m/min into a first-stage heating tunnel furnace and heating to 130°C to fully cure, to obtain core thermal conductive composition microspheres;
S5, Uniformly spraying the insulating layer premix onto the core thermal conductive composition microspheres at a spray speed of 50 g/min, then rolling at a speed of 10 m/min into a second-stage heating tunnel furnace and heating to 125°C to fully cure, to obtain insulated thermal conductive microspheres;
S6, Blowing the isolating layer premix into a nearly confined tunnel space with an airflow to maintain a concentration of 500 g/m³, passing the insulated thermal conductive microspheres through the above space at a conveying speed of 10 m/min to evenly coat the surfaces of the insulated thermal conductive microspheres with the isolating layer premix, to obtain a flexible silicone thermal conductive composition.

The thermal conductivity, oil bleeding rate, electrical insulation strength, gap filling range, and application mode of the flexible silicone thermal conductive compositions in Examples 1-6 were tested. The test results are shown in Table 1 below.

**Table 1: Performance Test Results of Examples 1-6**

| Item | Thermal Conductivity (W/mk) | Oil Bleeding Rate (%) | Electrical Insulation Strength (Kv/mm) | Gap Filling Range (mm) | Application mode |
|---|---|---|---|---|---|
| Example 1 | 1.2 | 0.012 | 24 | 0.1-10 | Automatic/Manual |
| Example 2 | 8.5 | 0.004 | 21 | 0.1-10 | Automatic/Manual |
| Example 3 | 1.0 | 0.015 | 30 | 0.1-10 | Automatic/Manual |
| Example 4 | 1.1 | 0.016 | 28 | 0.1-10 | Automatic/Manual |
| Example 5 | 1.5 | 0.008 | 25 | 0.1-10 | Automatic/Manual |
| Example 6 | 1.1 | 0.011 | 27 | 0.1-10 | Automatic/Manual |

Based on Example 1, Comparative Examples 1-6 follow.

### Comparative Example 1

The difference from Example 1 is the absence of the steps and related raw materials for the spherical insulating layer.

### Comparative Example 2

The difference from Example 1 is the absence of the steps and related raw materials for the spherical isolating layer.

### Comparative Example 3

The difference from Example 1 is that in the molecular structure formula of the silicone crosslinking agent, R1, R2, and R4 are all methyl groups.

### Comparative Example 4

The difference from Example 1 is that in the preparation of the thermal conductive microspheres - microsphere forming step, the heating temperature of pre-curing is 40°C, and the heating temperature of full curing is 80°C, with a rolling speed of 16 m/min.

### Comparative Example 5

The difference from Example 1 is that in the preparation of the thermal conductive microspheres - insulating layer forming step, the spraying speed is 0.2 g/min, and the heating temperature is 60°C.

### Comparative Example 6

The difference from Example 1 is that in the preparation of thermal conductive microspheres - isolating layer forming step, the coating concentration of the isolating layer is 20 g/m³, and the conveying speed is 30 m/min.

The following commercial products are selected.

### Commercial Product 1

A commercial thermal conductive pad with a thermal conductivity of 1.0 W/mk is selected.

### Commercial Product 2

A commercial thermal conductive pad with a thermal conductivity of 8 W/mk is selected.

### Commercial Product 3

A commercial thermal conductive silicone grease with a thermal conductivity of 1.0 W/mk is selected.

### Commercial Product 4

A commercial thermal conductive silicone gel with a thermal conductivity of 1.0 W/mk is selected.

The thermal conductivity, oil bleeding rate, electrical insulation strength, gap filling range, and application mode of the flexible silicone thermal conductive compositions in Comparative Examples 1-6 and Commercial Products 1-4 were tested and compared with the data of Example 1. The test results are shown in Table 2 below.

**Table 2: Effect Test Results of Example 1, Comparative Examples 1-6, and Commercial Products 1-4**

| Item | Thermal Conductivity (W/mk) | Oil Bleeding Rate (%) | Electrical Insulation Strength (Kv/mm) | Gap Filling Range (mm) | Application mode |
|---|---|---|---|---|---|
| Example 1 | 1.2 | 0.012 | 24 | 0.1-10 | Automatic/Manual |
| Comparative Example 1 | 1.2 | 5.31 | 9 | 0.1-5 | Manual |
| Comparative Example 2 | 1.2 | 0.013 | 23 | 0.1-10 | Manual |
| Comparative Example 3 | Not Formed | | | | |
| Comparative Example 4 | Not Formed | | | | |
| Comparative Example 5 | 1.2 | 4.62 | 10 | 0.1-6 | Manual |
| Comparative Example 6 | 1.2 | 0.013 | 24 | 0.1-10 | Manual |
| Commercial Product 1 | 1.0 | 6.851 | 9 | 0.5-10 | Manual |
| Commercial Product 2 | 8.0 | 2.264 | 4 | 0.5-10 | Manual |
| Commercial Product 3 | 1.0 | 13.278 | 3 | 0.03-0. 2 | Automatic/Manual |
| Commercial Product 4 | 1.0 | 7.942 | 8 | 0.1-5 | Automatic |

From Table 2, it can be seen that when there is no insulating layer, due to the absence of a dense silicone thin layer to encapsulate the core thermal conductive composition, the core thermal conductive composition, which needs to maintain a flexible state, has a low degree of crosslinking. The un-crosslinked silicone oil inside is prone to migration, and lacks the cage-like supporting structure, which affects the oil bleeding rate, electrical insulation strength, and gap filling range of the flexible silicone thermal conductive composition to varying degrees, and the application mode can only be manual. When there is no isolating layer, it is not easy to separate the insulating layer from the material of the tooling fixture due to the stickiness of the surface of the insulating layer surface, which makes the flexible silicone thermal conductive composition only suitable for manual use and unable to meet the requirements of automated production.

Comparing the adhesive of the present invention with the commercial products, it is evident that the flexible silicone thermal conductive composition of the present invention, among thermal conductive gap filling materials in the range of 1-8 W/mk, has extremely low oil bleeding rate and ultra-high electrical insulation strength compared to other materials. The gap filling range is also wider, meeting the requirements for both automated production and small-scale manual operations, and the application modes are more flexible.

The above description is only a specific implementation of the present invention. However, the scope of protection of the present invention is not limited to this. Any person skilled in the art can easily think of various equivalent modifications or replacements within the technical scope disclosed by the present invention. These modifications or replacements should be covered within the scope of protection of the present invention. Therefore, the scope of protection of the present invention should be subject to the scope of protection of the claims.

## Claims

1. A flexible silicone thermal conductive composition, comprising a core thermal conductive composition, an insulating layer, and an isolating layer, from inside to outside;
wherein the core thermal conductive composition comprises the following components by mass fraction: silicone base polymer 5-30%, silicone crosslinking agent 0.2-5%, silicone chain extender 1-8%, thermal conductive filler 60-93%, powder dispersant 0.1-1.2%, catalyst 0.02-0.2%, retarder 0.02-0.1%, and toughening agent 0.5-6%;
the insulating layer comprises the following components by mass fraction: silicone base polymer 85-95%, silicone crosslinking agent 0.2-8%, silicone chain extender 1-10%, dehydrating agent 0.1-0.5%, catalyst 0.05-0.15%, retarder 0.02-0.1%, and toughening agent 0.4-15%; and
the isolating layer comprises the following components by mass fraction: metal oxide 95-99%, and powder dispersant 1-5%.

2. The flexible silicone thermal conductive composition according to claim 1, wherein a mass ratio of the core thermal conductive composition, the insulating layer, and the isolating layer is 100:(0.1-2):(0.05-0.9).

3. The flexible silicone thermal conductive composition according to claim 1, wherein a hydrogen content of the silicone crosslinking agent is 0.05-1.1%, and a molecular structure formula of the silicone crosslinking agent is shown in Formula (1): 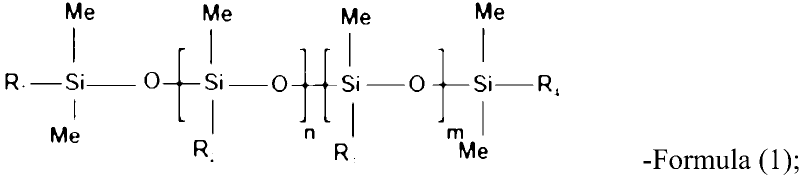 where R1, R2, and R4 are independently one or two selected from methyl and hydrogen, but are not all methyl simultaneously; R3 is methyl or phenyl; and n = 150-3000, m = 300-1500.

4. The flexible silicone thermal conductive composition according to claim 1, wherein a molecular structure formula of the silicone chain extender is shown in Formula (2): 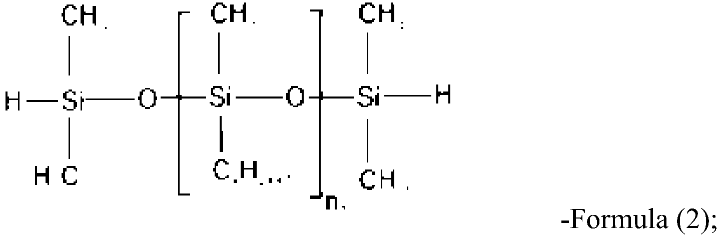 where n1=5-600, and x=1-18.

5. The flexible silicone thermal conductive composition according to claim 1, wherein the silicone base polymer is at least one selected from the group consisting of mono-terminal vinyl polydimethylsiloxane, di-terminal vinyl polydimethylsiloxane, mono-terminal vinyl polymethylphenylsiloxane, di-terminal vinyl polymethylphenylsiloxane, branched vinyl polydimethylsiloxane, and vinyl methyl silicone resin.

6. The flexible silicone thermal conductive composition according to claim 1, wherein a molecular structure formula of the powder dispersant is R-Si(OR)₃, where R is a straight-chain alkyl group with 8-16 carbon atoms.

7. The flexible silicone thermal conductive composition according to claim 1, wherein the catalyst is a platinum coordination catalyst with a molecular structure formula as shown in Formula (3): 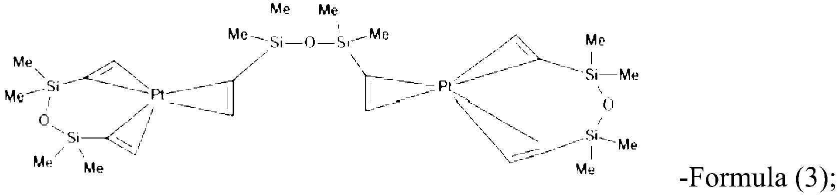 where a concentration of the platinum coordination catalyst is 200-9000 ppm.

8. The flexible silicone thermal conductive composition according to claim 1, wherein a molecular structure formula of the retarder is [CH₃(CH₂=CH)SiO]ₙ₂, where n2=4-8.

9. The flexible silicone thermal conductive composition according to claim 1, wherein a molecular structure formula of the dehydrating agent is CH₂=CHSi(R5)₃, where R5 is methoxy or ethoxy.

10. The flexible silicone thermal conductive composition according to claim 1, wherein the core thermal conductive composition further includes a colorant with a mass fraction of 0.05-0.3%.

11. The flexible silicone thermal conductive composition according to claim 5, wherein in the core thermal conductive composition, when the silicone base polymer is at least one selected from the group consisting of mono-terminal vinyl polydimethylsiloxane, di-terminal vinyl polydimethylsiloxane, mono-terminal vinyl polymethylphenylsiloxane, and di-terminal vinyl polymethylphenylsiloxane, a vinyl content is 0.05-3%, and a kinematic viscosity is 40-20,000 cst; when the silicone base polymer is branched vinyl polydimethylsiloxane, a kinematic viscosity is 200-50,000 cst, and a vinyl content is 3-9%; when the silicone base polymer is vinyl methyl silicone resin, a ratio of monofunctional silicon-oxygen units to tetrafunctional silicon-oxygen units in the vinyl methyl silicone resin is (0.5-0.85):1, and a vinyl content is 0.05-1.8%.

12. The flexible silicone thermal conductive composition according to claim 5, wherein in the insulating layer, a kinematic viscosity of the silicone base polymer is 1,000-150,000 cst; when the silicone base polymer is at least one selected from the group consisting of mono-terminal vinyl polydimethylsiloxane, di-terminal vinyl polydimethylsiloxane, mono-terminal vinyl polymethylphenylsiloxane, and di-terminal vinyl polymethylphenylsiloxane, a vinyl content is 0.02-1.2%; when the silicone base polymer is branched vinyl polydimethylsiloxane, a vinyl content is 3-9%; when the silicone base polymer is vinyl methyl silicone resin, a ratio of monofunctional silicon-oxygen units to tetrafunctional silicon-oxygen units in the vinyl methyl silicone resin is (0.5-0.85):1, and a vinyl content is 0.05-1.8%.

13. The flexible silicone thermal conductive composition according to claim 1, wherein the thermal conductive filler comprises large median particle size filler and small median particle size filler in a mass ratio of (1-5):1; the large median particle size filler has a median particle size of 30 - 200 µm, and the small median particle size filler has a median particle size of 0.1 - 15 µm; the large median particle size filler is selected from at least one of ceramic alumina, aluminum hydroxide, diamond, aluminum nitride, boron nitride, and magnesium oxide; and the small median particle size filler is selected from at least one of ceramic alumina, zinc oxide, silicon nitride, and aluminum nitride.

14. The flexible silicone thermal conductive composition according to claim 1, wherein the metal oxide is selected from at least one of aluminium oxide, zinc oxide and silicon dioxide; and a particle size of the metal oxide is 0.05-1 µm.

15. A method for preparing the flexible silicone thermal conductive composition according to any one of claims 1-14, comprising the following steps:
S1, preparation of a core thermal conductive composition premix: mixing and stirring the silicone base polymer, the silicone crosslinking agent, the silicone chain extender, the powder dispersant, the retarder, the toughening agent, and the thermal conductive filler according to a component proportion of the core thermal conductive composition, adding the catalyst, and continuing stirring until uniform to obtain the core thermal conductive composition premix;
S2, preparation of an insulating layer premix: vacuum heating and stirring the silicone base polymer according to a component proportion of the insulating layer to obtain a dried silicone base polymer, cooling a temperature to below 30 °C, mixing and stirring with the silicone crosslinking agent, the silicone chain extender, the dehydrating agent, and the retarder according to the component proportion, adding the catalyst, and continuing stirring until uniformly mixed to obtain the insulating layer premix;
S3, preparation of an isolating layer premix: heating and stirring the metal oxide and the powder dispersant according to a component proportion of the isolating layer until uniform to obtain the isolating layer premix;
S4, heating the thermal conductive composition premix at a temperature of 50-70°C for pre-curing, and extruding through an orifice with a diameter of 5-80 mm to form microspheres, then heating to fully cure to obtain core thermal conductive composition microspheres;
S5: uniformly spraying the insulating layer premix onto the core thermal conductive composition microspheres, heating to fully cure, to obtain insulated thermal conductive microspheres;
S6: blowing the isolating layer premix into a space with an airflow to maintain a concentration of 50-1600 g/m³, passing the insulated thermal conductive microspheres through the space to evenly coat surfaces of the insulated thermal conductive microspheres with the isolating layer premix, to obtain the flexible silicone thermal conductive composition.
